# EUROPÄISCHE PATENTSCHRIFT

(11) **EP 4 200 148 B1**
(45) Veröffentlichungstag und Bekanntmachung des Hinweises auf die Patenterteilung: **26.02.2025**
(21) Anmeldenummer: 21749863.3
(22) Anmeldetag: 30.07.2021
(51) Int. Cl.: B60K 1/00, B62D 21/02, B62D 21/09, B60K 1/04, B60K 5/12

(54) **MOTORHALTER UND FAHRZEUG MIT EINEM EBENSOLCHEN MOTORHALTER**
MOTOR SUPPORT AND VEHICLE WITH SUCH A MOTOR SUPPORT
SUPPORT DE MOTEUR ET VÉHICULE AVEC UN TEL SUPPORT DE MOTEUR

(30) Priorität: 20.08.2020 DE 102020121828
(43) Veröffentlichungstag der Anmeldung: 28.06.2023
(73) Patentinhaber: MAN Truck & Bus SE, 80995 München (DE)
(72) Erfinder: KÜMMEL, Daniel, 80636 München (DE); BRENDLER, Stefan, 80995 München (DE); SCHWEDES, Patrick, 80995 München (DE); KUSCH, Willi, 88239 Wangen im Allgäu (DE)
(74) Vertreter: v. Bezold & Partner Patentanwälte - PartG mbB
(86) Internationale Anmeldenummer: PCT/EP2021/071365
(87) Internationale Veröffentlichungsnummer: WO 2022/037922

(56) Entgegenhaltungen:
- WO-A1-2020/003835
- CN-A- 106 741 185
- CN-A- 109 094 347
- CN-A- 110 239 325

## Beschreibung

Die Erfindung betrifft einen Motorhalter zur Befestigung eines Elektromotors an einem Trägerrahmen eines Fahrzeugs sowie ein Fahrzeug mit einem ebensolchen Motorhalter.

Zum allgemeinen Stand der Technik wird auf die CN 106741185 A, die CN 110239325 A und WO 2020/003835 A1 verwiesen.

Die CN 106741185 A offenbart einen Fahrzeugrahmen für einen Lastkraftwagen, aufweisend einen Rahmenkörper, eine seitliche Batteriepack-Montagevorrichtung und eine Verbindungsvorrichtung zwischen dem Rahmenkörper und einem Motor. Der Rahmenkörper weist zwei Längsträger aus einer Aluminiumlegierung auf, die über Querträger aus einer Aluminiumlegierung miteinander verbunden sind. Die Batteriepack-Montagevorrichtung weist bodenseitig einen rechteckigen Rahmen auf, der zwei, über mehrere Querträger miteinander verbundene Längsträger umfasst. Ferner weist die Batteriepack-Montagevorrichtung zwei senkrecht zum rechteckigen Rahmen orientierte Verbindungsplatten auf, über die die Batteriepack-Montagevorrichtung mit einem der Längsträger des Rahmenkörpers verbunden ist. Die Verbindungsvorrichtung zwischen dem Rahmenkörper und dem Motor besteht aus vier Motoraufnahmen, die jeweils eine obere Deckplatte und eine dazu senkrechte Lochplatte mit vertikalen Schlitzen zur Befestigung des Motors aufweisen.

Die CN 110239325 A offenbart eine Antriebsmotorsaufhängung eines Fahrzeugs. Die Antriebsmotorsaufhängung umfasst zwei an den beiden Seiten des Motors angeordnete Motorbefestigungsbügel, wobei sich die Oberseiten der Motorbefestigungsbügel bis zur seitlichen Oberteilposition des Motors erstrecken und mit Motorbefestigungsquerträgern verbunden sind. Die Gesamtbreite der beiden Motorbefestigungsquerträger und des Motors ist kleiner als der Abstand zwischen zwei Fahrzeugrahmenlängsträgern. Aufhängungsbügel sind entsprechend mit den Unterseiten der Motorbefestigungsquerträger verbunden. Die von den Motorbefestigungsquerträgern entfernten Enden der beiden Aufhängungsbügel sind entsprechend mit den Fahrzeugrahmenlängsträgern verbunden, die entsprechend nahe an den Enden der beiden Aufhängungsbügel liegen. Zwischen den Motorbefestigungsquerträgern und den Aufhängungsbügeln sind Aufhängungspuffer angeordnet.

Die WO 2020/003835 A1 offenbart eine Haltevorrichtung für Fahrzeugbatterien. Die Haltevorrichtung hängt ein Batteriepaket an einem Seitenträger auf, der Teil eines Leiterrahmens eines Fahrzeugs bildet. Die Haltevorrichtung umfasst eine rahmenseitige Halterung, die durch Schrauben an einer äußeren Seitenfläche des Seitenträgers an einer Vielzahl von Schraubenbefestigungsteilen befestigt ist, die in einer Gitteranordnung angeordnet sind. Ein elastisches Kupplungsteil koppelt das Batteriepaket und die rahmenseitige Halterung elastisch. Ein Abstandshalter ist zwischen der äußeren Seitenfläche des Längsträgers und der rahmenseitigen Halterung eingefügt. Der Abstandshalter umfasst eine Vielzahl von säulenförmigen Elementen, die der Vielzahl von Schraubenbefestigungsteilen entsprechen, und ein Verbindungsteil, das die Vielzahl von säulenförmigen Elementen verbindet.

Im Allgemeinen erfolgt bei Nutzfahrzeugen die Lagerung des Motors über Konsolen des Fahrgestellrahmens, die in der Regel mehrfach vorhanden sind und den Motor an mehreren Befestigungspunkten (z. B. mittels 4-Punkt-Lagerung) am Rahmen des Fahrzeugs aufhängen. Die konstruktive Gestaltung der Konsolen - die auch als Motoraufhängungen oder Motorhalter bezeichnet werden - wird dabei von der Kräftebeanspruchung bestimmt, sodass die Motorhalter insbesondere in der Wirkungsrichtung der Betriebskräfte eine möglichst hohe Belastbarkeit bzw. Steifigkeit aufweisen sollen.

Aufgrund der zunehmenden Elektrifizierung von Nutzfahrzeugen und dem damit einhergehenden Einsatz von Elektromotoren statt Verbrennungsmotoren werden auch an die entsprechenden Motorhalter neue Anforderungen gestellt. So unterscheiden sich die beiden Motorarten in der Regel in ihrer konstruktiven Ausgestaltung (Abmessungen, Gewicht bzw. Gewichtsverteilung), sodass - insbesondere im Vergleich zu den zur Halterung von Verbrennungsmotoren bekannten Konzepten - ein Bedarf an einer verbesserten und/oder alternativen Lösung zur Halterung eines Elektromotors an einem Trägerrahmen eines Fahrzeugs besteht.

Aus der CN 109 094 347 A ist ein Motoraufhängungssystem eines elektrischen Nutzfahrzeugs bekannt.

Entsprechend ist es Aufgabe der Erfindung, eine Lösung für dieses Erfordernis bereitzustellen, mit der die Nachteile der herkömmlichen Techniken vermieden werden können. Insbesondere ist es Aufgabe der Erfindung, eine Lösung bereitzustellen, mittels derer eine einfache und sichere Befestigung eines Elektromotors am Fahrzeug erreicht werden kann.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Nach einem ersten unabhängigen Lösungsgedanken wird ein, vorzugsweise elektrisch antreibbares, Fahrzeug mit einem Elektromotor bereitgestellt. Vorzugsweise handelt es sich bei dem Fahrzeug dabei um ein Nutzfahrzeug, d. h. ein Fahrzeug, das durch seine Bauart und Einrichtung zur Beförderung von Personen, zum Transport von Gütern oder zum Ziehen von Anhängerfahrzeugen ausgelegt ist. Leidlich beispielhaft kann es sich bei dem Fahrzeug um einen Lastkraftwagen, einen Omnibus und oder einen Sattelzug handeln.

Das Fahrzeug umfasst dabei einen Trägerrahmen, der zwei voneinander beabstandete und über mehrere Querträger miteinander verbundene Längsträger (z. B. C-Profilträger) aufweist. Ferner umfasst das Fahrzeug einer Haltevorrichtung, mittels derer der Elektromotor (z. B. ein elektrischer Fahrmotor) am Trägerrahmen befestigt ist. Hierbei ist vorgesehen, dass die Haltevorrichtung zumindest einen, vorzugsweise vier, Motorhalter mit folgenden Komponenten umfasst: einen ersten Befestigungsbereich, der an einem der Längsträger, vorzugsweise lösbar, befestigt ist; einen zweiten Befestigungsbereich, der am Elektromotor oder einer Trägerstruktur des Elektromotors, vorzugsweise lösbar, befestigt ist; und ein den ersten und zweiten Befestigungsbereich verbindendes Distanzstück, welches den zweiten Befestigungsbereich derart vom ersten Befestigungsbereich beabstandet, dass der zweite Befestigungsbereich in Fahrzeughöhenrichtung H unterhalb der Längsträger angeordnet ist. Auf vorteilhafte Weise kann dadurch eine möglichst tiefe Einbauposition des Elektromotors im Fahrzeug erreicht werden und dadurch insgesamt ein, das Fahrverhalten positiv beeinflussendes, Absenken des Fahrzeugschwerpunktes erzielt werden.

Das Fahrzeug umfasst ferner zumindest ein Traktionsbatteriemodul. Das Traktionsbatteriemodul, welches auch als Hochvoltspeichermodul oder Traktionsbatteriemodul bezeichnet werden kann, kann hierbei z. B. eine Mehrzahl miteinander verschalteter Batteriezellen aufweisen. Das vorgenannte Traktionsbatteriemodul ist mittels des zumindest einen Motorhalters - vorzugsweise über dessen ersten Befestigungsbereich - am Trägerrahmen befestigt. Zudem oder alternativ dient der zumindest eine Motorhalter sowohl zur Befestigung des Elektromotors am Trägerrahmen als auch zur Befestigung des Traktionsbatteriemoduls am Trägerrahmen. D.h., mit anderen Worten kann sowohl der Elektromotor als auch das Traktionsbatteriemodul über den zumindest einen Motorhalter am Trägerrahmen befestigt sein. Auf vorteilhafte Weise erfüllt der Motorhalter damit eine Doppelfunktion, indem er sowohl die Anbindung des Elektromotors als auch die Anbindung des Traktionsbatteriemoduls am Trägerrahmen mithilfe ein und desselben Bauteils ermöglicht. Entsprechend kann der Motorhalter in diesem Zusammenhang auch als Motor-Batterie-Halter bezeichnet werden.

Nach einem ersten Aspekt der Erfindung kann das Distanzstück in Fahrzeughöhenrichtung eine Ausdehnung von zumindest 10 cm, vorzugsweise zumindest 15 cm besitzen. Zudem oder alternativ kann der zweite Befestigungsbereich in Fahrzeughöhenrichtung zumindest 10 cm, vorzugsweise zumindest 15 cm, unterhalb der Längsträger angeordnet sein. In diesem Zusammenhang kann der Ausdruck "unterhalb" der Längsträger insbesondere als unterhalb der Unterkante bzw. unterhalb der Untergrenze Längsträger verstanden werden.

Um ferner auf vorteilhafte Weise eine möglichst stabile Aufhängung des Motors zu erreichen, kann gemäß einem weiteren Aspekt der Erfindung der zweite Befestigungsbereich (der z. B. in Form einer einzigen Durchgangsbohrung zur Aufnahme eines Befestigungsmittels ausgebildet sein kann) in Fahrzeughöhenrichtung auf Höhe des Schwerpunkts des Elektromotors angeordnet sein. Mit anderen Worten kann der Elektromotor auf Schwerpunkthöhe gelagert sein. Hierbei können die Ausdrücke "auf Höhe des Schwerpunkts" bzw. "auf Schwerpunkthöhe" dahingehend verstanden werden, dass sich der zweite Befestigungsbereich (in Fahrzeughöhenrichtung) im Wesentlichen auf derselben Höhe wie der Schwerpunkt des Elektromotors befindet. Vorzugsweise weicht die Höhe des zweiten Befestigungsbereichs hierbei um weniger als 5 cm von der Höhe des Schwerpunkts des Elektromotors ab. Zudem oder alternativ kann der Schwerpunkt des Elektromotors in Fahrzeughöhenrichtung auch unterhalb der Längsträger angeordnet sein. Wie vorstehend bereits erwähnt, kann auch hier der Ausdruck "unterhalb" der Längsträger insbesondere als unterhalb der Unterkante bzw. Untergrenze der Längsträger verstanden werden. Auf vorteilhafte Weise kann auch dadurch ein, das Fahrverhalten positiv beeinflussendes, Absenken des Fahrzeugschwerpunktes erreicht werden.

Nach einem weiteren Aspekt der Erfindung kann der zumindest eine Motorhalter als im Wesentlichen L-förmiges Formteil ausgebildet sein. Das Formteil - vorzugsweise ein Aluminium-Formteil - soll hierbei einen ersten Schenkel und einen, vorzugsweise im Wesentlichen senkrecht zum ersten Schenkel orientierten, zweiten Schenkel aufweisen, wobei der erste Befestigungsbereich am ersten Schenkel und der zweite Befestigungsbereich am zweiten Schenkel angeordnet ist. Vorzugsweise soll dabei der zweite Schenkel dabei kürzer als der erste Schenkel ausgebildet sein. Beispielsweise kann der erste Schenkel eine Länge von etwa 35-45 cm, beispielsweise 40 cm, und der zweite Schenkel eine Länge von etwa 10-15 cm, beispielsweise 13 cm, aufweisen. Weiterhin sollen bevorzugt keine weiteren Stützstrukturen zwischen den beiden Schenkeln vorhanden sein. Der Vorteil dieser Ausgestaltung liegt darin, dass dadurch der zweite Befestigungsbereich möglichst direkt unterhalb des entsprechenden Längsträgers des Trägerrahmens liegt und dadurch eine Abstützung auf breiter Lagerbasis erreicht werden kann.

Nach einem weiteren Aspekt der Erfindung kann das Traktionsbatteriemodul, der erste Befestigungsbereich des zumindest einen Motorhalters und der Längsträger, d. h. der Längsträger an dem der entsprechende Motorhalter befestigt ist, zueinander korrespondierende, vorzugsweise rasterförmig angeordnete, Durchgangsöffnungen umfassen. Beispielsweisel können die Durchgangsöffnungen dabei als eine Mehrzahl in einem quadratischen und/oder rechteckigen Muster angeordneter Löcher (z. B. Rasterbohrungen) ausgebildet sein. Der Ausdruck "korrespondierend" kann in diesem Zusammenhang dahingehend verstanden werden, dass alle drei Bauteile jeweils dasselbe Lochmuster, d. h. dieselbe Anzahl von Durchgangsöffnungen in derselben Anordnung, umfassen. In den Durchgangsöffnungen können dabei jeweils, sich durch die korrespondierenden Durchgangsöffnungen erstreckende, Befestigungsmittel zur kraftschlüssigen und/oder formschlüssigen Fixierung der besagten Komponenten aufgenommen sein. Bei den Befestigungsmitteln kann es sich z. B. um Schrauben, Bolzen und/oder Nieten handeln. Insgesamt kann dadurch auf vorteilhafte Weise eine hohe Anbindungssteifigkeit der vorstehenden Verbindung erzielt werden.

Gemäß einem weiteren Aspekt der Erfindung kann der erste Befestigungsbereich des zumindest einen Motorhalters zwischen dem Längsträger und dem Traktionsbatteriemodul verstiftet und/oder verschraubt und/oder vernietet sein. Zudem oder alternativ kann das Traktionsbatteriemodul fahrzeugaußenseitig am zumindest einen Motorhalter, vorzugsweise fahrzeugaußenseitig an dessen ersten Befestigungsbereich, befestigt sein. Mit anderen Worten kann das Traktionsbatteriemodul einen größeren Querabstand zur Längsmittelebene des Fahrzeugs als der entsprechende Motorhalter aufweisen. Zudem oder alternativ kann das Traktionsbatteriemodul und der Längsträger auf gegenüberliegenden Seiten des ersten Befestigungsbereichs des zumindest einen Motorhalters bzw. des zumindest einen Motor-Batterie-Halters befestigt sein. Vorzugsweise ist dabei das Traktionsbatteriemodul auf einer fahrzeugaußenseitigen Seite des ersten Befestigungsbereichs und der Längsträger auf einer fahrzeuginnenseitigen Seite des ersten Befestigungsbereichs befestigt. Wie vorstehend bereits erwähnt, wird durch die Kombination der Motor- und Batterieaufhängung in einer Haltekonsole auf vorteilhafte Weise eine bauteilarme Möglichkeit zur Anbindung der verschiedenen Komponenten bereitgestellt.

Nach einem weiteren Aspekt der Erfindung kann der erste Befestigungsbereich des zumindest einen Motorhalters fahrzeugaußenseitig an einem der Längsträger befestigt sein. Zudem oder alternativ kann der erste Befestigungsbereich des zumindest einen Motorhalters auch möglichst nahe am Schubmittelpunkt eines der Längsträger befestigt sein. Als "Schubmittelpunkt" kann dabei derjenige Punkt eines Profilquerschnitts verstanden werden, durch den die Resultierende der Querkräfte gehen muss, um eine verdrehungsfreie Krafteinwirkung zu erreichen, bzw. um keine Torsion auf den Querschnitt auszuüben.

Um ferner auf vorteilhafte Weise auch eine Dämpfungswirkung bei der Motorlagerung zu erreichen, kann zudem oder alternativ der zweite Befestigungsbereich des zumindest einen Motorhalters auch ein elastisches Lager, vorzugsweise einen Gummi-Metall-Puffer, zur Schwingungsdämpfung umfassen. Derartige Bauteile sind hierbei grundsätzlich im Stand der Technik bekannt und bestehen zumeist aus einer metallischen Lagerbuchse, welche von wenigstens einem Gummikörper umgeben werden. Besonders vorteilhaft ist in diesem Zusammenhang, falls der zweite Befestigungsbereich in Form einer einzigen Durchgangsbohrung ausgebildet ist, in der das vorgenannte elastische Lager eingepresst ist.

Gemäß einem weiteren Aspekt der Erfindung kann die Haltevorrichtung mehrere, vorzugsweise zumindest vier, Motorhalter umfassen. Vorzugsweise sind die Motorhalter hierbei identisch ausgebildet, wobei die Motorhalter alternativ auch - zumindest teilweise - gemäß unterschiedlichen, in diesem Dokument beschriebenen, Ausführungsformen ausgebildet sein können. Im Fall, dass die Haltevorrichtung zumindest vier Motorhalter umfasst, sollen an jedem der Längsträger bevorzugt zumindest zwei Motorhalter an in Fahrzeuglängsrichtung versetzten Montagepositionen befestigt sein. Auf vorteilhafte Weise kann so eine besonders stabile Aufhängung, beispielsweise in Form einer 4-Punkt-Lagerung, erreicht werden.

Nach einem weiteren Aspekt der Erfindung kann sich in einem Frontbereich des Fahrzeugs ein Querabstand der beiden Längsträger verbreitern. D. h. mit anderen Worten sollen die beiden Längsträger nicht über ihre gesamte Länge parallel verlaufen, sondern in einem Frontbereich auseinanderlaufen. Um hierbei dennoch auf vorteilhafte Weise eine möglichst gleichbleibende Montageposition zu ermöglichen, können die die ersten Befestigungsbereiche der Motorhalter jeweils zumindest ein Abstandsausgleichelement (z. B. in Form von zumindest einer Distanzhülse) umfassen. Dessen jeweilige Ausdehnung kann dabei in Fahrzeugquerrichtung an den Querabstand des jeweiligen Längsträgers an den entsprechenden Montagepositionen derart angepasst sein, dass die zweiten Befestigungsbereiche und/oder die fahrzeugaußenliegenden Außenseiten aller Motorhalter an einem Längsträger denselben Querabstand zur Längsmittelebene des Fahrzeugs aufweisen. Mit anderen Worten können die Abstandsausgleichelemente die Änderung des Längsträgerverlaufs derart ausgleichen, dass die Motorhalter bzw. insbesondere deren fahrzeugaußenliegenden Außenseiten in Fahrzeuglängsrichtung bündig angeordnet sind.

Gemäß einem weiteren Aspekt der Erfindung können die jeweiligen Abstandsausgleichelemente in Form von Distanzhülsen ausgebildet sein. Vorzugsweise sind die Distanzhülsen dabei konzentrisch um die vorstehend erwähnten Durchgangsöffnungen des ersten Befestigungsbereichs angeordnet. Zudem oder alternativ können die Außenseiten aller Motorhalter an einem Längsträger abschnittsweise eine zur Fahrzeugquerrichtung senkrechte ebene Anlagefläche für zumindest ein Traktionsbatteriemodul bilden. Auf vorteilhafte Weise wird dadurch eine einfache Möglichkeit zum Ausgleich des sich verändernden Längsträgerabstands bereitgestellt.

Nach einem weiteren Aspekt der Erfindung kann das Fahrzeug zumindest zwei Traktionsbatteriemodule umfassen, wobei an jedem der Längsträger zumindest ein Traktionsbatteriemodul über zumindest zwei Motorhalter befestigt ist. Beispielsweise kann das Fahrzeug ein linksseitiges und ein rechtsseitiges Traktionsbatteriemodul umfassen, wobei jedes der Traktionsbatteriemodule mittels zwei Motorhalter am Trägerrahmen befestigt ist.

Nach einem weiteren unabhängigen Aspekt der Erfindung wird ein Motorhalter zur Befestigung eines Motors, vorzugsweise eines Elektromotors, an einem Trägerrahmen eines Fahrzeugs bereitgestellt. Der Trägerrahmen kann dabei z. B. zwei voneinander beabstandete und über mehrere Querträger miteinander verbundene Längsträger (z. B. C-Profilträger) aufweisen. Der vorgenannte Motorhalter, welcher in diesem Zusammenhang auch als Motoraufhängung oder Konsole bezeichnet werden kann, ist dabei als im Wesentlichen L-förmiges Formteil (z. B. ein Aluminium-Formteil) ausgebildet, aufweisend einen ersten Schenkel und einen, vorzugsweise im Vergleich zum ersten Schenkel kürzeren, zweiten Schenkel. Beispielsweise kann der erste Schenkel eine Länge von etwa 35-45 cm, beispielsweise 40 cm und der zweite Schenkel eine Länge von etwa 10-15 cm, beispielsweise 13 cm, aufweisen. Vorzugsweise stehen die beiden Schenkel im Wesentlichen senkrecht aufeinander. Weiterhin sollen bevorzugt keine weiteren Stützstrukturen und/oder weiteren Verbindungen zwischen den beiden Schenkeln vorhanden sein.

Ferner umfasst der erste Schenkel einen ersten Befestigungsbereich zur, vorzugsweise lösbaren, Befestigung des Motorhalters am Trägerrahmen des Fahrzeugs. Weiterhin umfasst der zweite Schenkel einen zweiten Befestigungsbereich zur, vorzugsweise lösbaren, Befestigung des Motorhalters am Motors oder einer Trägerstruktur des Motors.

Dabei umfasst der erste Befestigungsbereich eine Mehrzahl von, vorzugsweise parallel zueinander verlaufende und/oder rasterförmig angeordnete, Durchgangsöffnungen zur Aufnahme von Befestigungsmittel, vorzugsweise zur Aufnahme von Stiften, Schrauben und/oder Nieten. Vorzugsweise umfasst der erste Befestigungsbereich dabei zumindest 10, besonders bevorzugt zumindest 15 Durchgangsöffnungen. Weiterhin sollen die Durchgangsöffnungen bevorzugt in einem quadratischen und/oder rechteckigen Muster angeordnet sein.

Die jeweiligen Durchgangsöffnungen des ersten Befestigungsbereichs werden jeweils konzentrisch von Distanzhülsen umgeben, über deren Länge beim Befestigen des Motorhalters am Trägerrahmen des Fahrzeugs der Abstand zwischen dem ersten Schenkel und dem Trägerrahmen einstellbar ist. Mit anderen Worten kann mittels vorgenannter Distanzhülsen der Abstand des ersten Schenkels vom Trägerrahmen variiert werden.

Gemäß einem weiteren Aspekt der Erfindung kann der zweite Befestigungsbereich lediglich eine Durchgangsbohrung zur Aufnahme eines Befestigungsmittels, vorzugsweise zur Aufnahme eines Stifts, einer Schraube und/oder eines Niets, umfassen. Zudem oder alternativ kann der zweite Befestigungsbereich ein elastisches Lager, vorzugsweise in Form eines Gummi-Metall-Puffers, umfassen. Vorzugsweise ist dabei das elastische Lager in die vorgenannte Durchgangsbohrung eingepresst.

Weitere Einzelheiten und Vorteile der Erfindung werden im Folgenden unter Bezugnahme auf die beigefügten Zeichnungen beschrieben. Es zeigen:
- Figur 1:: verschiedene schematische Ansichtsdarstellungen (Seitenansicht, Frontansicht, und Aufsicht) eines Fahrzeugs gemäß einer Ausführungsform der Erfindung.
- Figur 2:: zwei verschiedene Ansichten einer schematischen Ausschnittdarstellung einer Motorlagerung eines Fahrzeugs gemäß einer Ausführungsform der der Erfindung.
- Figur 3:: verschiedene Ansichten eines Motorhalters zur Befestigung eines Motors an einem Trägerrahmen eines Fahrzeugs gemäß einer Ausführungsform der der Er- findung; und
- Figur 4:: schematische Aufsicht auf einen Ausschnitt einer Motorlagerung eines Fahrzeugs gemäß einer weiteren Ausführungsform der der Erfindung.

Gleiche oder funktional äquivalente Elemente sind dabei in allen Figuren mit denselben Bezugszeichen bezeichnet und zum Teil nicht gesondert beschrieben.

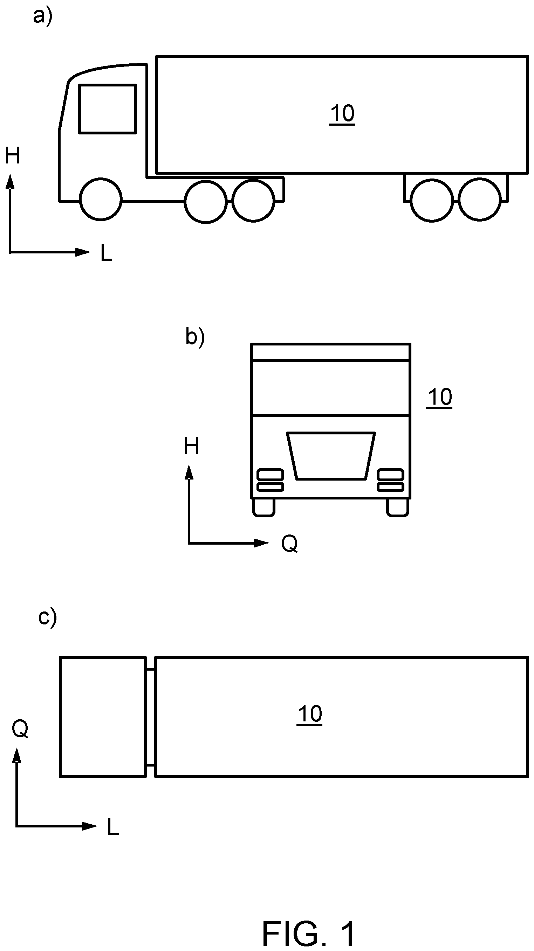

Figur 1 zeigt verschiedene schematische Ansichtsdarstellungen (Seitenansicht, Frontansicht, und Aufsicht) eines Fahrzeugs 10 gemäß einer ersten Ausführungsform der Erfindung.

Vorliegend handelt es sich bei dem Fahrzeug 10 - lediglich beispielhaft - um einen Sattelzug aus Sattelzugmaschine und Sattelauflieger. Die verschiedenen, mit a), b) und c) bezeichneten Ansichten des Fahrzeugs 10 sowie die darin mittels der Pfeile markierten Richtungen dienen hierbei lediglich dazu, die insgesamt in diesem Dokument verwendeten Richtungsangaben, darunter eine Fahrzeuglängsrichtung L, eine Fahrzeughöhenrichtung H und eine Fahrzeugquerrichtung Q, zu verdeutlichen. Gemäß der üblichen Verwendung sind diese drei Richtungen dabei entlang der Hauptachsen bzw. Symmetrieachsen des Fahrzeugs 10 orientiert und stehen wechselseitig senkrecht aufeinander. Im Detail zeigt die Darstellung a) eine Seitenansicht des Fahrzeugs 10 in einer Ebene senkrecht zur Fahrzeugquerrichtung Q, Darstellung b) eine Frontansicht des Fahrzeugs 10 in einer Ebene senkrecht zur Fahrzeuglängsrichtung L und Darstellung c) eine Aufsicht des Fahrzeugs 10 in einer Ebene senkrecht zur Fahrzeughöhenrichtung H. Basierend auf diesen Richtungsangaben werden im Folgenden nun weitere Details zur Ausgestaltung der Motorlagerung eingehender behandelt.

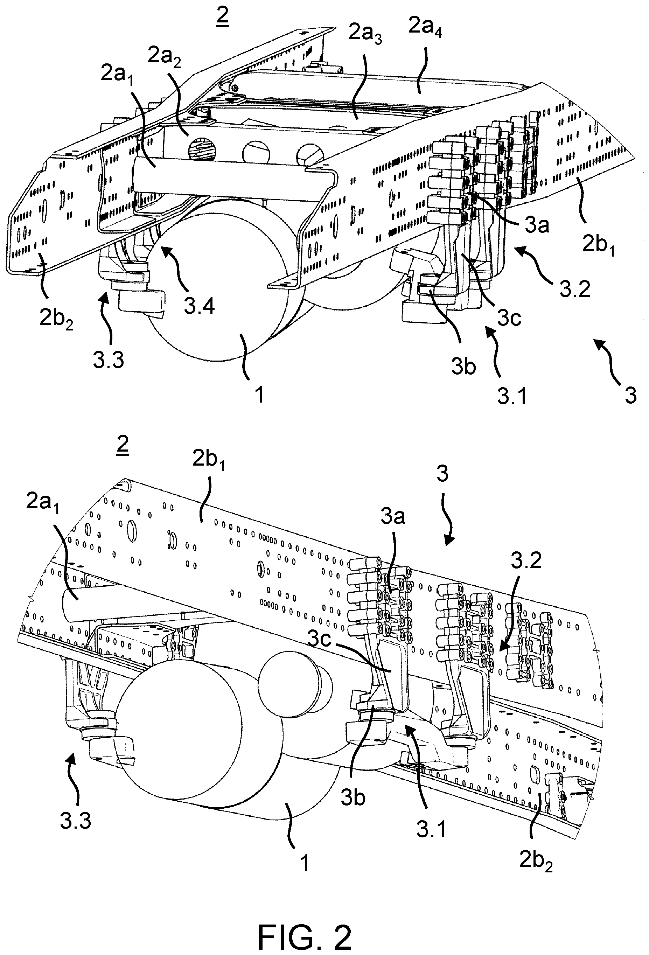

Figur 2 zeigt zwei verschieden Ansichten einer schematischen Ausschnittdarstellung einer (derselben) Motorlagerung eines Fahrzeugs 10 gemäß einer Ausführungsform der der Erfindung. Das hierbei nicht näher dargestellte Fahrzeug 10 weist dabei einen Trägerrahmen 2 in Verbundbauweise auf, der zwei voneinander beabstandete und über mehrere Querträger 2a₁, 2a₂, 2a₃, 2a₄ miteinander verbundene Längsträger 2b₁, 2b₂ umfasst. Lediglich beispielhaft sind die beiden Längsträger 2b₁, 2b₂ hierbei als in Fahrzeuglängsrichtung L verlaufende C-Profilträger ausgebildet.

Weiterhin umfasst das Fahrzeug einen Elektromotor 1 (z. B. einen elektrischen Fahrmotor), der mittels einer im Folgenden näher beschriebenen Haltevorrichtung 3 am Trägerrahmen 2 befestigt ist. Hierzu umfasst die Haltevorrichtung 3 im vorliegenden lediglich beispielhaften Fall vier separate Motorhalter 3.1, 3.2, 3.3 und 3.4 zur Realisierung einer 4-Punkt-Lagerung des Elektromors 1. Die einzelnen Motorhalter 3.1, 3.2, 3.3, 3.4 weisen dabei jeweils einen ersten Befestigungsbereich 3a auf, der an jeweils einem der Längsträger 2b₁, 2b₂, vorzugsweise lösbar, befestigt ist (zur besseren Übersicht ist der entsprechende Bereich - wie auch die Folgenden - nur für den Motorhalter 3.1 in Figur 2 markiert). Ferner umfasst jeder der Motorhalter 3.1, 3.2, 3.3, 3.4. einen zweiten Befestigungsbereich 3b, der am Elektromotor 1, vorzugsweise lösbar, befestigt ist. Weiterhin ist vorgesehen, dass die Motorhalter 3.1, 3.2, 3.3, 3.4 jeweils ein den ersten und zweiten Befestigungsbereich 3a, 3b verbindendes Distanzstück 3c umfassen, welches den zweiten Befestigungsbereich 3b derart vom ersten Befestigungsbereich 3a beabstandet (im vorliegenden Fall beispielsweise etwa 15 cm), dass der zweite Befestigungsbereich 3b in Fahrzeughöhenrichtung H unterhalb der Längsträger 2b₁, 2b₂ angeordnet ist. Wie hierbei auch in den beiden Ansichten der Figur 2 ersichtlich, wird dadurch auf vorteilhafte Weise insgesamt eine - bezogen auf die Fahrzeughöhenrichtung H - "tiefe" Einbauposition des Elektromotors 1 im Fahrzeug 10 erreicht. Besonders vorteilhaft ist dabei, wenn der Schwerpunkt des Elektromotors 1 in Fahrzeughöhenrichtung unterhalb der Längsträger liegt und/oder wenn sich der zweite Befestigungsbereich 3b der Motorhalter 3.1, 3.2, 3.3, 3.4 jeweils etwa auf Höhe des Schwerpunkts des Elektromotors 1 befindet. Auf vorteilhafte Weise kann dadurch insgesamt eine möglichst optimale Abstützung des Elektromotors 1 auf breiter Lagerbasis in Schwerpunkthöhe bereitgestellt werden.

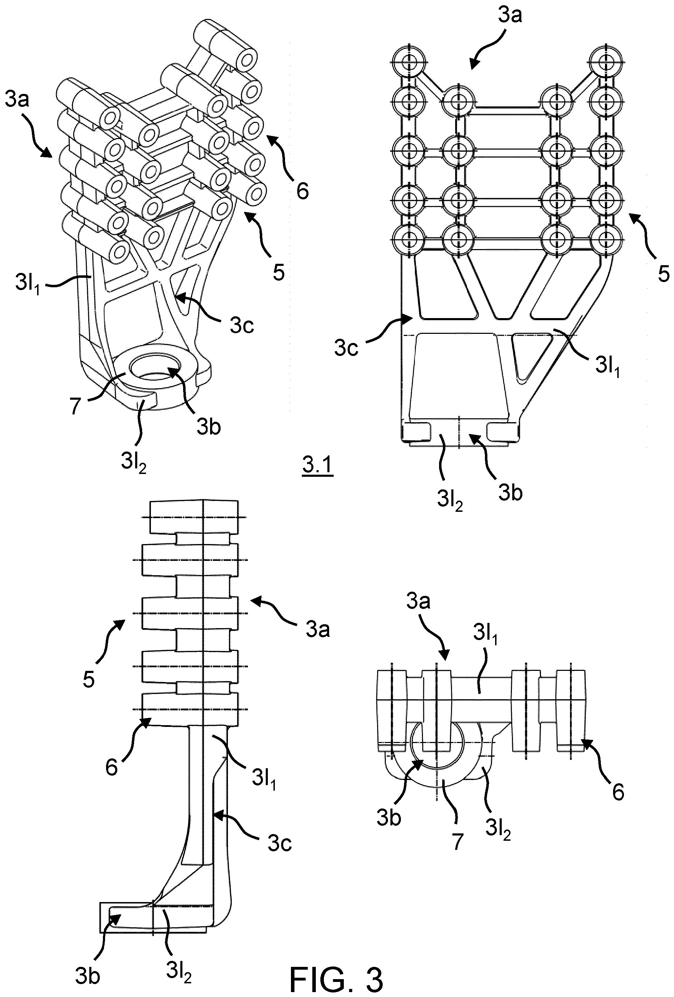

Figur 3 zeigt drei verschiedene Ansichten eines Motorhalters 3.1 zur Befestigung eines Motors, vorzugsweise eines Elektromotors 1, an einem Trägerrahmen 2 eines Fahrzeugs 10 gemäß einer Ausführungsform der der Erfindung. Der entsprechende Trägerrahmen 2 kann dabei, wie z. B. in Figur 2 gezeigt, lediglich beispielhaft zwei voneinander beabstandete und über mehrere Querträger 2a₁, 2a₂, 2a₃, 2a₄ miteinander verbundene Längsträger 2b₁, 2b₂ aufweisen. Der Motorhalter 3.1, welcher auch als Motoraufhängung oder Konsole bezeichnet werden kann, ist dabei als im Wesentlichen L-förmiges Formteil (z. B. ein Aluminium-Formteil) ausgebildet und weist einen ersten Schenkel 3I₁ und einen, vorzugsweise im Vergleich zum ersten Schenkel 3I₁ kürzeren, zweiten Schenkel 3I₂ auf. Lediglich beispielhaft kann der erste Schenkel 3I₁ eine Länge von etwa 40 cm und der zweite Schenkel 3I₂ eine Länge von etwa 13 cm besitzen. Vorzugsweise stehen die beiden Schenkel 3I₁, 3I₂ im Wesentlichen senkrecht aufeinander. Weiterhin sollen bevorzugt keine weiteren Stützstrukturen und/oder weiteren Verbindungen zwischen den beiden Schenkeln 3I₁, 3I₂ vorhanden sein.

Der erste, vorzugsweise als im Wesentlichen planes Formteil ausgebildete, Schenkel 3I₁ umfasst dabei einen ersten Befestigungsbereich 3a zur, vorzugsweise lösbaren, Befestigung des Motorhalters 3.1 am Trägerrahmen 2, vorzugsweise an einem Längsträger 2b₁, 2b₂, des Fahrzeugs 10. Der erste Befestigungsbereich 3a kann dabei eine Mehrzahl von, vorzugsweise parallel zueinander verlaufende, Durchgangsöffnungen 5 zur Aufnahme von Befestigungsmittel, vorzugsweise zur Aufnahme von Stiften, Schrauben und/oder Nieten, umfassen.

Vorliegend umfasst der Motorhalter 3.1 lediglich beispielhaft 18 Durchgangsöffnungen, die in voneinander beanstandeten Reihen von jeweils 5 bzw. 4 Bohrungen angeordnet sind. Weiterhin umfasst der erste Schenkel 3I₁ ein Distanzstück 3c, welches den erste Befestigungsbereich 3a vom zweiten Schenkel 3I₂ bzw. dem Scheitel der beiden Schenkel 3I₁ und 3I₂ beabstandet.

Der zweite, vorzugsweise ebenfalls als im Wesentlichen planes Formteil ausgebildete, Schenkel 3I₂ weist ferner einen zweiten Befestigungsbereich 3b zur, vorzugsweise lösbaren, Befestigung des Motorhalters 3.1 am Motor oder einer Trägerstruktur des Motors auf. Hierbei kann der zweite Befestigungsbereich 3b in Form lediglich einer Durchgangsbohrung zur Aufnahme eines Befestigungsmittels, vorzugsweise zur Aufnahme eines Stifts, einer Schraube und/oder eines Niets, ausgebildet sein. Weiterhin kann der zweite Befestigungsbereich 3b ein elastisches Lager 7, vorzugsweise in Form eines Gummi-Metall-Puffers, umfassen, welches bevorzugt in die vorgenannte Durchgangsbohrung eingepresst ist.

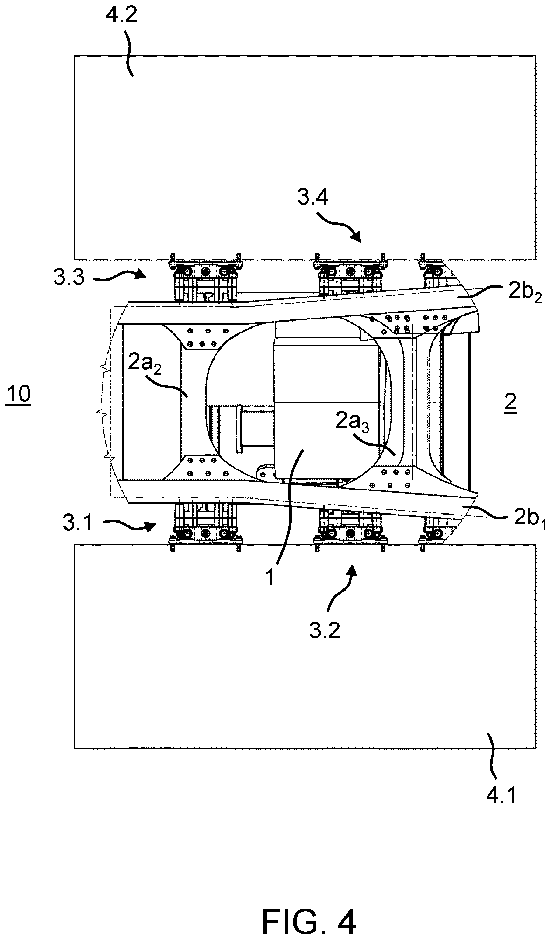

Optional können die jeweiligen Durchgangsöffnungen 5 des Motorhalters 3.1 - zumindest einseitig - jeweils konzentrisch von Distanzhülsen 6 umgeben werden. Wie hierbei im Zusammenhang mit Figur 4 verdeutlicht werden wird, kann über deren Länge beim Befestigen des Motorhalters 3.1 am Trägerrahmen 2 des Fahrzeugs 10 der Abstand zwischen dem ersten Schenkels 3I₁ und dem Trägerrahmen 2 eingestellt werden. Mit anderen Worten kann mittels der entsprechenden Distanzhülsen 6 der Abstand des ersten Schenkels 3I₁ vom Trägerrahmen variiert werden.

Figur 4 zeigt dazu eine schematische Aufsicht auf einen Ausschnitt einer Motorlagerung eines Fahrzeugs 10 gemäß einer weiteren Ausführungsform der der Erfindung. Das nicht näher dargestellte Fahrzeug 10 umfasst hierbei wiederum einen Trägerrahmen 2, der zwei voneinander beabstandete und über mehrere Querträger 2a₁, 2a₂, 2a₃, 2a₄ miteinander verbundene Längsträger 2b₁, 2b₂ aufweist, wobei ein Elektromotor 1 mittels mehrerer vorstehend bereits diskutierter Motorhalter 3.1, 3.2, 3.3 und 3.4 am Trägerrahmen 2 befestigt ist.

Im Unterscheid zu der z. B. in Figur 2 gezeigten Ausführungsform umfasst das Fahrzeug 10 hierbei zusätzlich zwei Traktionsbatteriemodule 4.1 und 4.2, welche jeweils wiederum eine Mehrzahl miteinander verschalteter Batteriezellen aufweisen können. Wie in der Draufsicht in Figur 3 zu erkennen, sind die beiden Traktionsbatteriemodule 4.1, 4.2 hierbei über die Motorhalter 3.1, 3.2, 3.3, 3.4 am Trägerrahmen 2 befestigt, wobei im Detail jedes der beiden Traktionsbatteriemodule 4.1, 4.2 über jeweils zumindest zwei Motorhalter 3.1, 3.2, 3.3, 3.4 an jeweils einem der Längsträger 2b₁, 2b₂ angebunden ist. Auf vorteilhafte Weise erfüllen die Motorhalter damit eine Doppelfunktion, indem sie sowohl zur Befestigung des Elektromotors 1 am Trägerrahmen 2 als auch zur Befestigung der Traktionsbatteriemodule 4.1, 4.2 am Trägerrahmen 2 dienen, sodass die entsprechenden Motorhalter 3.1, 3.2, 3.3, 3.4 in diesem Zusammenhang auch als Motor-Batterie-Halter bezeichnet werden können.

Bevorzugt erfolgt die Abbringung der entsprechenden Traktionsbatteriemodule 4.1, 4.2 dabei dadurch, dass das jeweilige Traktionsbatteriemodul 4.1, 4.2, der jeweilige erste Befestigungsbereich 3a der Motorhalter 3.1, 3.2, 3.3, 3.4 und der jeweilige Längsträger 2b₁, 2b₂, zueinander korrespondierende Durchgangsöffnungen 5 umfassen (vgl. auch Figur 2). D. h. alle Bauteile sollen jeweils dasselbe Lochmuster, d. h. dieselbe Anzahl von Durchgangsöffnungen in derselben Anordnung, aufweisen. Zur Anbringung können sodann in die einzelnen Durchgangsöffnungen 5 jeweils, sich durch die Durchgangsöffnungen 5 erstreckende, Befestigungsmittel zur kraftschlüssigen und/oder formschlüssigen Fixierung der besagten Komponenten aufgenommen werden. Beispielsweise kann der erste Befestigungsbereich 3a der jeweiligen Motorhalter 3.1, 3.2, 3.3, 3.4 zwischen dem jeweiligen Längsträger 2b₁, 2b₂ und dem jeweiligen Traktionsbatteriemodul 4.1, 4.2 verstiftet und/oder verschraubt und/oder vernietet sein. Wie ferner aus Figur 4 ersichtlich, erfolgt die Anbringung der Traktionsbatteriemodule 4.1, 4.2 vorzugsweise fahrzeugaußenseitig an den Motorhaltern, sodass diese einen größeren Querabstand zur Längsmittelebene des Fahrzeugs 10 als die entsprechenden Motorhalter 3.1, 3.2, 3.3, 3.4 aufweisen.

Im vorliegend in Figur 4 exemplarisch dargestellten Fall, dass sich die Längsträger 2b₁, 2b₂ des Fahrzeugs 10 dabei in einem Frontbereich des Fahrzeugs 10 verbreitern, d. h., dass die beiden Längsträger 2b₁, 2b₂ nicht über ihre gesamte Länge im selben Abstand parallel verlaufen, kann über eine entsprechende Ausführung der Motorhalter 3.1, 3.2, 3.3, 3.4 auf vorteilhafte Weise dennoch eine möglichst gleichbleibende Montageposition für die Traktionsbatteriemodule 4.1, 4.2 geschaffen werden. Hierzu können die ersten Befestigungsbereiche 3a der Motorhalter 3.1, 3.2, 3.3, 3.4 jeweils zumindest ein Abstandsausgleichelement (z. B. in Form der vorgenannten Distanzhülsen 6) umfassen, dessen jeweilige Ausdehnung dabei in Fahrzeugquerrichtung Q an den Querabstand des jeweiligen Längsträgers 2b₁, 2b₂ an den entsprechenden Montagepositionen derart angepasst ist, dass die zweiten Befestigungsbereiche 3b und/oder die fahrzeugaußenliegenden Außenseiten der Motorhalter 3.1, 3.2, 3.3, 3.4 an einem Längsträger 2b₁, 2b₂ denselben Querabstand zur Längsmittelebene des Fahrzeugs 10 aufweisen. Im vorliegenden exemplarischen Fall sind dazu die, die Durchgangsöffnungen 5 umgebenden, Distanzhülsen 6 (vgl. auch Figur 2) der "vorderen" Motorhalter 3.1 und 3.3 länger ausgebildet als die der "hinteren" Motorhalter 3.2 und 3.4, sodass dadurch der an den jeweiligen Montagepositionen variierende Abstand der beiden 2b₁, 2b₂ ausgeglichen werden kann und eine abschnittsweise zur Fahrzeugquerrichtung Q senkrechte ebene Anlagefläche die jeweiligen Traktionsbatteriemodule 4.1 und 4.2 gebildet werden kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Elektromotor
- 2: Trägerrahmen
- 2a₁, 2a₂, 2a₃, 2a₄: Querträger
- 2b₁, 2b₂: Längsträger
- 3: Haltevorrichtung
- 3.1, 3.2, 3.3, 3.4: Motorhalter
- 3a: Erster Befestigungsbereich
- 3b: Zweiter Befestigungsbereich
- 2c: Distanzstück
- 3I₁: Erster Schenkel
- 3I₂: Zweiter Schenkel
- 4.1, 4.2: Traktionsbatteriemodul
- 5: Durchgangsöffnungen
- 6: Distanzhülsen
- 7: Elastisches Lager
- 10: Fahrzeug

## Patentansprüche

1. Fahrzeug (10), vorzugsweise Nutzfahrzeug, mit einem Elektromotor (1), wobei das Fahrzeug (10) einen Trägerrahmen (2) aufweist, der zwei voneinander beabstandete und über mehrere Querträger (2a₁, 2a₂, 2a₃, 2a₄) miteinander verbundene Längsträger (2b₁, 2b₂), vorzugsweise C-Profilträger, umfasst; und wobei der Elektromotor (1) mittels einer Haltevorrichtung (3) am Trägerrahmen (2) befestigt ist;
wobei die Haltevorrichtung (3) zumindest einen, vorzugsweise vier, Motorhalter (3.1, 3.2, 3.3, 3.4) mit folgenden Komponenten umfasst:
a) einen ersten Befestigungsbereich (3a), der an einem der Längsträger (2b₁, 2b₂) befestigt ist;
b) einen zweiten Befestigungsbereich (3b), der am Elektromotor (1) oder einer Trägerstruktur des Elektromotors (1) befestigt ist; und
c) ein den ersten und zweiten Befestigungsbereich (3a, 3b) verbindendes Distanzstück (3c),
wobei das Distanzstück (3c) den zweiten Befestigungsbereich (3b) vom ersten Befestigungsbereich (3a) derart beabstandet, dass der zweite Befestigungsbereich (3b) in Fahrzeughöhenrichtung (H) unterhalb der Längsträger (2b₁, 2b₂) angeordnet ist;
**dadurch gekennzeichnet, dass** das Fahrzeug (10) ein Traktionsbatteriemodul (4.1) umfasst,
- wobei das Traktionsbatteriemodul (4.1) mittels des zumindest einen Motorhalters (3.1), vorzugsweise über dessen ersten Befestigungsbereich (3a), am Trägerrahmen (2) befestigt ist; und/oder
- wobei der zumindest eine Motorhalter (3.1) sowohl zur Befestigung des Elektromotors (1) am Trägerrahmen (2) als auch zur Befestigung des Traktionsbatteriemoduls (4.1) am Trägerrahmen (2) dient.

2. Fahrzeug (10) nach Anspruch 1, **dadurch gekennzeichnet,**
- **dass** das Distanzstück (3c) in Fahrzeughöhenrichtung (H) eine Ausdehnung von zumindest 10 cm, vorzugsweise zumindest 15 cm besitzt; und/oder
- **dass** der zweite Befestigungsbereich (3b) in Fahrzeughöhenrichtung (H) zumindest 10 cm, vorzugsweise zumindest 15 cm, unterhalb der Längsträger (2b₁, 2b₂) angeordnet ist.

3. Fahrzeug (10) nach einem der vorherigen Ansprüche, **dadurch gekennzeichnet,**
- **dass** der zweite Befestigungsbereich (3b) in Fahrzeughöhenrichtung (H) auf Höhe des Schwerpunkts des Elektromotors (1) angeordnet ist; und/oder
- **dass** der Schwerpunkt des Elektromotors (1) in Fahrzeughöhenrichtung (H) unterhalb der Längsträger (2b₁, 2b₂) angeordnet ist.

4. Fahrzeug (10) nach einem der vorherigen Ansprüche, **dadurch gekennzeichnet, dass** der zumindest eine Motorhalter (3.1) als im Wesentlichen L-förmiges Formteil ausgebildet ist, aufweisend einen ersten Schenkel (3I₁) und einen, im Vergleich zum ersten Schenkel (3I₁) kürzeren, zweiten Schenkel (3I₂), wobei der erste Befestigungsbereich (3a) am ersten Schenkel (3I₁) und der zweite Befestigungsbereich (3b) am zweiten Schenkel (3I₂) angeordnet ist.

5. Fahrzeug (10) nach einem der vorherigen Ansprüche, **dadurch gekennzeichnet, dass** das Traktionsbatteriemodul (4.1), der erste Befestigungsbereich (3a) des zumindest einen Motorhalters (3.1) und der Längsträger zueinander korrespondierende, vorzugsweise rasterförmig angeordnete, Durchgangsöffnungen (5) umfassen, in welchen jeweils, sich durch die korrespondierenden Durchgangsöffnungen (5) erstreckende, Befestigungsmittel zur kraftschlüssigen und/oder formschlüssigen Fixierung der besagten Komponenten aufgenommen sind.

6. Fahrzeug (10) nach einem der vorherigen Ansprüche, **dadurch gekennzeichnet,**
- **dass** der erste Befestigungsbereich (3a) des zumindest einen Motorhalters (3.1) zwischen dem Längsträger und dem Traktionsbatteriemodul (4.1) verstiftet und/oder verschraubt und/oder vernietet ist; und/oder
- **dass** das Traktionsbatteriemodul (4.1) fahrzeugaußenseitig am zumindest einen Motorhalter (3.1) befestigt ist und/oder
- **dass** das Traktionsbatteriemodul (4.1) und der Längsträger auf gegenüberliegenden Seiten des ersten Befestigungsbereichs (3a) des zumindest einen Motorhalters (3.1) befestigt sind.

7. Fahrzeug (10) nach einem der vorherigen Ansprüche, **dadurch gekennzeichnet,**
- **dass** der erste Befestigungsbereich (3a) des zumindest einen Motorhalters (3.1) fahrzeugaußenseitig an einem der Längsträger (2b₁, 2b₂) befestigt ist; und/oder
- **dass** der erste Befestigungsbereich (3a) des zumindest einen Motorhalters (3.1) möglichst nahe am Schubmittelpunkt eines der Längsträger (2b₁, 2b₂) befestigt ist; und/oder
- **dass** der zweite Befestigungsbereich (3b) des zumindest einen Motorhalters (3.1) ein elastisches Lager, vorzugsweise einen Gummi-Metall-Puffer, zur Schwingungsdämpfung umfasst.

8. Fahrzeug (10) nach einem der vorherigen Ansprüche, **dadurch gekennzeichnet, dass** die Haltevorrichtung (3) zumindest vier, vorzugsweise identisch ausgebildete, Motorhalter (3.1, 3.2, 3.3, 3.4) umfasst, wobei an jedem der Längsträger (2b₁, 2b₂) zumindest zwei Motorhalter (3.1, 3.2; 3.3, 3.4) an in Fahrzeuglängsrichtung (L) versetzten Montagepositionen befestigt sind.

9. Fahrzeug (10) nach Anspruch 8, **dadurch gekennzeichnet, dass** sich einem Frontbereich des Fahrzeugs (10) ein Querabstand der beiden Längsträger (2b₁, 2b₂) verbreitert, wobei die ersten Befestigungsbereiche (3a) der Motorhalter (3.1, 3.2, 3.3, 3.4) jeweils zumindest ein Abstandsausgleichelement umfassen, dessen jeweilige Ausdehnung in Fahrzeugquerrichtung (Q) an den Querabstand des jeweiligen Längsträgers (2b₁, 2b₂) an der entsprechenden Montagepositionen derart angepasst ist, dass die zweiten Befestigungsbereiche (3b) und/oder die fahrzeugaußenliegenden Außenseiten aller Motorhalter (3.1, 3.2; 3.3, 3.4) an einem Längsträger (2b₁, 2b₂) denselben Querabstand zur Längsmittelebene des Fahrzeugs (10) aufweisen.

10. Fahrzeug (10) nach Anspruch 9, **dadurch gekennzeichnet,**
- **dass** die jeweiligen Abstandsausgleichelemente in Form von Distanzhülsen ausgebildet sind; und/oder
- **dass** die Außenseiten aller Motorhalter (3.1, 3.2; 3.3, 3.4) an einem Längsträger (2b₁, 2b₂) abschnittsweise eine zur Fahrzeugquerrichtung (Q) senkrechte ebene Anlagefläche für zumindest ein Traktionsbatteriemodul (4.1) bilden.

11. Fahrzeug (10) nach einem der Ansprüche 8 bis 10, **gekennzeichnet durch** zumindest zwei Traktionsbatteriemodule (4.1, 4.2), wobei an jedem der Längsträger (2b₁, 2b₂) zumindest ein Traktionsbatteriemodul (4.1, 4.2) über zumindest zwei Motorhalter (3.1, 3.2; 3.3, 3.4) befestigt ist.

12. Motorhalter (3.1) zur Befestigung eines Motors, vorzugsweise eines Elektromotors (1), an einem Trägerrahmen (2) eines Fahrzeugs (10),
- wobei der Motorhalter (3.1) als im Wesentlichen L-förmiges Formteil ausgebildet ist, aufweisend einen ersten Schenkel (3I₁) und einen, vorzugsweise im Vergleich zum ersten Schenkel (3I₁) kürzeren, zweiten Schenkel (3I₂);
- wobei der erste Schenkel (3I₁) einen ersten Befestigungsbereich (3a) zur Befestigung des Motorhalters (3.1) am Trägerrahmen (2) des Fahrzeugs (10) umfasst; und
- wobei der zweite Schenkel (3I₂) einen zweiten Befestigungsbereich (3a) zur Befestigung des Motorhalters (3.1) am Motor oder einer Trägerstruktur des Motors, umfasst
wobei der erste Befestigungsbereich (3a) eine Mehrzahl von, vorzugsweise parallel zueinander verlaufenden, Durchgangsöffnungen (5) zur Aufnahme von Befestigungsmitteln, vorzugsweise zur Aufnahme von Stiften, Schrauben und/oder Nieten, umfasst; und
**dadurch gekennzeichnet, dass** die Durchgangsöffnungen (5) des ersten Befestigungsbereichs (3a) jeweils konzentrisch von Distanzhülsen umgeben werden, über deren Länge beim Befestigen des Motorhalters (3.1) am Trägerrahmen (2) des Fahrzeugs (10) der Abstand zwischen dem ersten Schenkel (3I₁) und dem Trägerrahmen (2) einstellbar ist.

13. Motorhalter (3.1), nach Anspruch 12, **dadurch gekennzeichnet, dass** der zweite Befestigungsbereich (3b) ein elastisches Lager, vorzugsweise in Form eines Gummi-Metall-Puffers, umfasst.

## Claims

1. A vehicle (10), preferably a utility vehicle, comprising an electric motor (1), wherein the vehicle (10) comprises a carrier frame (2), comprising two longitudinal support members (2b₁, 2b₂), preferably C-profile beams, spaced apart from each other and interconnected by a plurality of cross beams (2a₁, 2a₂, 2a₃, 2a₄); and wherein the electric motor (1) is fastened to the carrier frame (2) by means of a holding device (3);
wherein the holding device (3) comprises at least one, preferably four, motor supports (3.1, 3.2, 3.3, 3.4) comprising the following components:
a) a first fastening portion (3a) fastened to one of the longitudinal support members (2b₁, 2b₂);
b) a second fastening portion (3b) fastened to the electric motor (1) or a supporting structure of the electric motor (1); and
c) a spacer (3c) connecting the first and second fastening portions (3a, 3b),
wherein the spacer (3c) spaces the second fastening portion (3b) from the first fastening portion (3a) such that the second fastening portion (3b) is arranged below the longitudinal support members (2b₁, 2b₂) in the vehicle height direction (H);
**characterised in that** the vehicle (10) comprises a traction battery module (4.1),
- wherein the traction battery module (4.1) is fastened to the carrier frame (2) by means of the at least one motor support (3.1), preferably via the first fastening portion (3a) thereof; and/or
- wherein the at least one motor support (3.1) serves both for fastening the electric motor (1) to the carrier frame (2) and for fastening the traction battery module (4.1) to the carrier frame (2).

2. The vehicle (10) according to claim 1, **characterised in that**
- the spacer (3c) has an extension of at least 10 cm, preferably at least 15 cm, in the direction of the height (H) of the vehicle; and/or
- the second fastening portion (3b) is arranged at least 10 cm, preferably at least 15 cm, below the longitudinal support members (2b₁, 2b₂) in the direction of the height (H) of the vehicle.

3. The vehicle (10) according to one of the preceding claims, **characterised in that**
- the second fastening portion (3b) is arranged at the level of the centre of gravity of the electric motor (1) in the direction of the height (H) of the vehicle; and/or
- the centre of gravity of the electric motor (1) is arranged below the longitudinal support members (2b₁, 2b₂) in the direction of the height (H) of the vehicle.

4. The vehicle (10) according to one of the preceding claims, **characterised in that** the at least one motor support (3.1) is configured as a substantially L-shaped formed part, comprising a first leg (3I₁) and a second leg (3I₂), which is shorter than the first leg (3I₁), wherein the first fastening portion (3a) is arranged on the first leg (3I₁) and the second fastening portion (3b) is arranged on the second leg (3I₂).

5. The vehicle (10) according to one of the preceding claims, **characterised in that** the traction battery module (4.1), the first fastening portion (3a) of the at least one motor support (3.1), and the longitudinal support member comprise corresponding through-holes (5), preferably arranged in a grid-like pattern, in each of which fastening means extending through the corresponding through-holes (5) are received for the non-positive and/or positive fixing of the said components.

6. The vehicle (10) according to one of the preceding claims, **characterised in that**
- the first fastening portion (3a) of the at least one motor support (3.1) is pinned and/or bolted and/or riveted between the longitudinal support member and the traction battery module (4.1); and/or
- the traction battery module (4.1) is fastened to the at least one motor support (3.1) on the outside of the vehicle and/or
- the traction battery module (4.1) and the longitudinal support member are fastened on opposite sides of the first fastening portion (3a) of the at least one motor support (3.1).

7. The vehicle (10) according to one of the preceding claims, **characterised in that**
- the first fastening portion (3a) of the at least one motor support (3.1) is fastened to one of the longitudinal support members (2b₁, 2b₂) on the outside of the vehicle; and/or
- the first fastening portion (3a) of the at least one motor support (3.1) is fastened as close as possible to the centre of shear of one of the longitudinal support members (2b₁, 2b₂); and/or
- the second fastening portion (3b) of the at least one motor support (3.1) comprises an elastic bearing, preferably a rubber-metal buffer, for vibration damping.

8. The vehicle (10) according to one of the preceding claims, **characterised in that** the holding device (3) comprises at least four, preferably identically configured, motor supports (3.1, 3.2, 3.3, 3.4), wherein at least two motor supports (3.1, 3.2; 3.3, 3.4) are fastened to each of the longitudinal support members (2b₁, 2b₂) at mounting positions offset in the longitudinal direction of the vehicle (L).

9. The vehicle (10) according to claim 8, **characterised in that** a transverse distance between the two longitudinal support members (2b₁, 2b₂) widens in a front region of the vehicle (10), wherein the first fastening portions (3a) of the motor supports (3.1, 3.2, 3 .3, 3.4) each comprise at least one distance compensation element, the respective extent of which in the transverse direction (Q) of the vehicle is adapted to the transverse distance of the respective longitudinal support members (2b₁, 2b₂) at the corresponding mounting positions such that the second fastening portions (3b) and/or the outer sides of all motor supports (3.1, 3.2; 3.3, 3.4) on a longitudinal support member (2b₁, 2b₂) have the same transverse distance to the longitudinal centre plane of the vehicle (10).

10. The vehicle (10) according to claim 9, **characterised in that**
- the respective distance compensation elements are configured as spacer sleeves; and/or
- the outer sides of all motor supports (3.1, 3.2; 3.3, 3.4) on a longitudinal support member (2b₁, 2b₂) form, in sections, a plane abutment face, perpendicular to the transverse direction (Q) of the vehicle for at least one traction battery module (4.1).

11. The vehicle (10) according to one of claims 8 to 10, **characterised by** at least two traction battery modules (4.1, 4.2), wherein at least one traction battery module (4.1, 4.2) is fastened to each of the longitudinal support members (2b₁, 2b₂) by way of at least two motor supports (3.1, 3.2; 3.3, 3.4).

12. A motor support (3.1) for fastening a motor, preferably an electric motor (1), to a carrier frame (2) of a vehicle (10),
- the motor support (3.1) being configured as a substantially L-shaped formed part, comprising a first leg (3I₁) and a second leg (3I₂), which is preferably shorter than the first leg (3I₁);
- wherein the first leg (3I₁) comprises a first fastening portion (3a) for fastening the motor support (3.1) to the carrier frame (2) of the vehicle (10); and
- wherein the second leg (3I₂) comprises a second fastening portion (3a) for fastening the motor support (3.1) to the motor or a supporting structure of the motor,
wherein the first fastening portion (3a) comprises a plurality of through-holes (5) extending preferably parallel to one another for receiving fastening means, preferably for receiving pins, screws, and/or rivets; and
**characterised in that** the through-holes (5) of the first fastening portion (3a) are each concentrically surrounded by spacer sleeves, over the length of which the distance between the first leg (3I₁) and the carrier frame (2) can be adjusted when fastening the engine holder (3.1) to the carrier frame (2) of the vehicle (10).

13. The motor support (3.1) according to claim 12, **characterised in that** the second fastening portion (3b) comprises an elastic bearing, preferably in the form of a rubber-metal buffer.

## Revendications

1. Véhicule (10), de préférence véhicule utilitaire, ayant un moteur électrique (1), le véhicule (10) présentant un châssis (2) qui comprend deux longerons (2b₁, 2b₂), de préférence des poutres profilées en C, espacés l'un de l'autre et reliés entre eux par plusieurs traverses (2a₁, 2a₂, 2a₃, 2a₄) ; et le moteur électrique (1) étant fixé au châssis (2) au moyen d'un dispositif de maintien (3) ;
le dispositif de maintien (3) comprenant au moins un, de préférence quatre, supports de moteur (3.1, 3.2, 3.3, 3.4) avec les composants suivants :
a) une première zone de fixation (3a) qui est fixée à l'un des longerons (2b₁, 2b₂) ;
b) une deuxième zone de fixation (3b) qui est fixée au moteur électrique (1) ou à une structure de support du moteur électrique (1) ; et
c) une pièce d'écartement (3c) reliant les première et deuxième zones de fixation (3a, 3b),
la pièce d'écartement (3c) espaçant la deuxième zone de fixation (3b) de la première zone de fixation (3a) de telle sorte que la deuxième zone de fixation (3b) est agencée au-dessous des longerons (2b₁, 2b₂) dans la direction (H) de la hauteur du véhicule ;
**caractérisé en ce que** le véhicule (10) comprend un module (4.1) de batterie de traction,
- le module (4.1) de batterie de traction étant fixé au châssis (2) au moyen dudit au moins un support de moteur (3.1), de préférence via sa première zone de fixation (3a) ; et/ou
- ledit au moins un support de moteur (3.1) servant à la fois à fixer le moteur électrique (1) au châssis (2) et à fixer le module (4.1) de batterie de traction au châssis (2).

2. Véhicule (10) selon la revendication 1, **caractérisé**
- **en ce que** la pièce d'écartement (3c) possède une extension d'au moins 10 cm, de préférence d'au moins 15 cm, dans la direction (H) de la hauteur du véhicule ; et/ou
- **en ce que** la deuxième zone de fixation (3b) est agencée, dans la direction (H) de la hauteur du véhicule, au moins 10 cm, de préférence au moins 15 cm, en dessous des longerons (2b₁, 2b₂).

3. Véhicule (10) selon l'une des revendications précédentes, **caractérisé**
- **en ce que** la deuxième zone de fixation (3b) est agencée, dans la direction (H) de la hauteur du véhicule, au niveau du centre de gravité du moteur électrique (1) ; et/ou
- **en ce que** le centre de gravité du moteur électrique (1) est situé en dessous des longerons (2b₁, 2b₂) dans la direction (H) de la hauteur du véhicule.

4. Véhicule (10) selon l'une des revendications précédentes, **caractérisé en ce que** ledit au moins un support de moteur (3.1) est réalisé sous la forme d'une pièce moulée essentiellement en forme de L, présentant une première branche (3I₁) et une deuxième branche (3I₂) plus courte que la première branche (3I₁), la première zone de fixation (3a) étant agencée sur la première branche (3I₁) et la deuxième zone de fixation (3b) sur la deuxième branche (3I₂).

5. Véhicule (10) selon l'une des revendications précédentes, **caractérisé en ce que** le module (4.1) de batterie de traction, la première zone de fixation (3a) dudit au moins un support de moteur (3.1) et le longeron comprennent des ouvertures de passage (5) correspondantes les unes aux autres, de préférence agencées en forme de grille, dans lesquelles sont logés respectivement des moyens de fixation s'étendant à travers les ouvertures de passage (5) correspondantes, pour la fixation par force et/ou par complémentarité de forme desdits composants.

6. Véhicule (10) selon l'une des revendications précédentes, **caractérisé**
- **en ce que** la première zone de fixation (3a) dudit au moins un support de moteur (3.1) est rivetée et/ou vissée et/ou goupillée entre le longeron et le module (4.1) de batterie de traction ; et/ou
- **en ce que** le module (4.1) de batterie de traction est fixé à l'extérieur du véhicule sur ledit au moins un support de moteur (3.1) et/ou
- **en ce que** le module (4.1) de batterie de traction et le longeron sont fixés sur des côtés opposés de la première zone de fixation (3a) dudit au moins un support de moteur (3.1).

7. Véhicule (10) selon l'une des revendications précédentes, **caractérisé**
- **en ce que** la première zone de fixation (3a) dudit au moins un support de moteur (3.1) est fixée à l'un des longerons (2b₁, 2b₂) du côté extérieur du véhicule ; et/ou
- **en ce que** la première zone de fixation (3a) dudit au moins un support de moteur (3.1) est fixée le plus près possible du centre de poussée de l'un des longerons (2b₁, 2b₂) ; et/ou
- **en ce que** la deuxième zone de fixation (3b) dudit au moins un support de moteur (3.1) comprend un palier élastique, de préférence un tampon caoutchouc-métal, pour amortir les vibrations.

8. Véhicule (10) selon l'une des revendications précédentes, **caractérisé en ce que** le dispositif de maintien (3) comprend au moins quatre supports de moteur (3.1, 3.2, 3.3, 3.4), de préférence identiques, au moins deux supports de moteur (3.1, 3.2 ; 3.3, 3.4) étant fixés sur chacun des longerons (2b₁, 2b₂) à des positions de montage décalées dans la direction longitudinale (L) du véhicule.

9. Véhicule (10) selon la revendication 8, **caractérisé en ce qu'**une distance transversale des deux longerons (2b₁, 2b₂) s'élargit dans une zone avant du véhicule (10), les premières zones de fixation (3a) des supports de moteur (3.1, 3.2, 3.3, 3.4) comprennent chacune au moins un élément de compensation de distance dont l'extension respective dans la direction transversale (Q) du véhicule est adaptée à la distance transversale du longeron respectif (2b₁, 2b₂) dans la position de montage correspondante de telle sorte que les deuxièmes zones de fixation (3b) et/ou les côtés extérieurs, situés à l'extérieur du véhicule, de tous les supports de moteur (3.1, 3.2 ; 3.3, 3.4) sur un longeron (2b₁, 2b₂) présentent la même distance transversale par rapport au plan médian longitudinal du véhicule (10).

10. Véhicule (10) selon la revendication 9, **caractérisé**
- **en ce que** les éléments de compensation de distance respectifs sont réalisés sous forme de douilles d'espacement ; et/ou
- **en ce que** les côtés extérieurs de tous les supports de moteur (3.1, 3.2 ; 3.3, 3.4) forment sur un longeron (2b₁, 2b₂), par sections, une surface d'appui plane perpendiculaire à la direction transversale (Q) du véhicule pour au moins un module (4.1) de batterie de traction.

11. Véhicule (10) selon l'une des revendications 8 à 10, **caractérisé par** au moins deux modules de batterie de traction (4.1, 4.2), au moins un module de batterie de traction (4.1, 4.2) étant fixé sur chacun des longerons (2b₁, 2b₂) par l'intermédiaire d'au moins deux supports moteur (3.1, 3.2 ; 3.3, 3.4).

12. Support de moteur (3.1) pour la fixation d'un moteur, de préférence d'un moteur électrique (1), sur un châssis (2) d'un véhicule (10),
- le support de moteur (3.1) étant conçu sous la forme d'une pièce moulée essentiellement en forme de L, présentant une première branche (3I₁) et une deuxième branche (3I₂), de préférence plus courte que la première branche (3I₁) ;
- la première branche (3I₁) comprenant une première zone de fixation (3a) pour la fixation du support de moteur (3.1) sur le châssis (2) du véhicule (10) ; et
- la deuxième branche (3I₂) comprenant une deuxième zone de fixation (3a) pour fixer le support de moteur (3.1) au moteur ou à une structure de support du moteur, la première zone de fixation (3a) comprenant une pluralité d'ouvertures de passage (5), de préférence parallèles les unes aux autres, pour recevoir des moyens de fixation, de préférence pour recevoir des broches, des vis et/ou des rivets ; et
**caractérisé en ce que** les ouvertures de passage (5) de la première zone de fixation (3a) sont respectivement entourées de manière concentrique par des douilles d'écartement dont la longueur permet de régler la distance entre la première branche (3I₁) et le châssis (2) lors de la fixation du support de moteur (3.1) sur le châssis (2) du véhicule (10).

13. Support de moteur (3.1), selon la revendication 12, **caractérisé en ce que** la deuxième zone de fixation (3b) comprend un support élastique, de préférence sous la forme d'un tampon caoutchouc-métal.
